# EUROPEAN PATENT APPLICATION

(11) **EP 4 789 885 A1**
(43) Date of publication of application: **12.08.2026**
(21) Application number: 24876111.6
(22) Date of filing: 25.06.2024
(51) Int. Cl.: B60K 1/02, B60K 7/00

(54) **DISTRIBUTED DRIVE SYSTEM OF VEHICLE AND DRIVE ASSEMBLY**

(30) Priority: 08.10.2023 CN 202311301427
(71) Applicant: Dongfeng Motor Group Co., Ltd, Wuhan, Hubei 430056 (CN)
(72) Inventor: LEI, Jun, Wuhan, Hubei 430056 (CN); FU, Li, Wuhan, Hubei 430056 (CN); NIE, Shaowen, Wuhan, Hubei 430056 (CN); LI, Manli, Wuhan, Hubei 430056 (CN); LIU, Huan, Wuhan, Hubei 430056 (CN)
(74) Representative: Valet Patent Services Limited
(86) International application number: PCT/CN2024/101335
(87) International publication number: WO 2025/077288

(57) **Abstract**

A distributed drive system (10) and a drive assembly (1) for a vehicle, relating to the field of vehicle drive systems. The distributed drive system comprises: a first drive system (100), the first drive system comprising a first drive motor (110) and a first transmission assembly (120); and a second drive system (200), the second drive system comprising a second drive motor (210) and a second transmission assembly (220). The first drive motor and the second drive motor, respectively via the first transmission assembly and the second transmission assembly, drive different wheels of the same drive axle to rotate. In a plane parallel to an axial direction of an output shaft of the first drive motor, a projection of the output shaft of the first drive motor and a projection of an output shaft of the second drive motor have an overlapping portion.

## Description

### CROSS-REFERENCE TO RELATED APPLICATION

The embodiments of the application are based on and claim the priority of the Chinese patent application No. 202311301427.0, filed on October 8, 2023. The entire contents of the Chinese patent application are incorporated herein by reference into the embodiments of the present application.

### TECHNICAL FIELD

The invention relates to the field of vehicle drive systems, and in particular to a distributed drive system and drive assembly for a vehicle.

### BACKGROUND

A distributed drive system refers to a drive system that different wheels are driven respectively by independent and distinct drive motors. Torques output by various drive motors of such drive system may be not coupled with one another, so that the torque output by various drive motors can be independently controlled according to driving force requirement of each wheel, and differential steering of the vehicle can also be realized by controlling different rotational speeds of the wheels. In a related distributed drive system, different wheels are driven by different in-wheel motors. Such distributed drive system has a structure that is not compact enough and requires a large space.

### SUMMARY

The invention provides a distributed drive system and a drive assembly for a vehicle, for solving a technical problem of how to make a structure of the distributed drive system more compact, thereby reducing an occupied space of the distributed drive system.

The invention provides a distributed drive system for a vehicle. The distributed drive system includes: a distributed drive system and a drive assembly for a vehicle, relating to the field of vehicle drive systems. The distributed drive system comprises: a first drive system, the first drive system comprising a first drive motor and a first transmission assembly; and a second drive system, the second drive system comprising a second drive motor and a second transmission assembly. The first drive motor and the second drive motor, respectively via the first transmission assembly and the second transmission assembly, drive different wheels of the same drive axle to rotate. In a plane parallel to an axial direction of an output shaft of the first drive motor, a projection of the output shaft of the first drive motor and a projection of an output shaft of the second drive motor have an overlapping portion.

As a second aspect, the invention further provides a drive assembly for a vehicle, the drive assembly including: a range extender assembly, configured to charge a power battery of the vehicle; an in-wheel motor, configured to drive wheels of a front drive axle of the vehicle; and the distributed drive system as described above, configured to drive wheels of a rear drive axle of the vehicle.

The invention provides a distributed drive system for a vehicle. The distributed drive system includes a first drive system and a second drive system. The first drive system includes a first drive motor and a first transmission assembly. The second drive system includes a second drive motor and a second transmission assembly. The first drive motor and the second drive motor drive, respectively through the first transmission assembly and the second transmission assembly, different wheels of the same drive axle to rotate, to realize a distributed driving of the drive axle. Meanwhile, in a plane parallel to an axial direction of an output shaft of the first drive motor, a projection of the output shaft of the first drive motor and a projection of an output shaft of the second drive motor have an overlapping portion, that is, the output shaft of the first drive motor and the output shaft of the second drive motor are disposed at an interval in a direction perpendicular to the axial direction of the output shaft of the first drive motor, and the output shaft of the first drive motor and the output shaft of the second drive motor are disposed in a staggered manner in the axial direction of the output shaft of the first drive motor. By disposing the output shaft of the first drive motor and the output shaft of the second drive motor in an axially overlapping manner, an arrangement of the distributed drive system in this axial direction is made more compact, and a dimension of the distributed drive system in this axial direction is reduced.

### BRIEF DESCRIPTION OF DRAWINGS

FIG. 1 is a schematic structural diagram of a distributed drive system for a vehicle according to an embodiment of the invention;
FIG. 2 is a schematic diagram showing a relative positional relationship between a first drive motor and a second drive motor in the distributed drive system for the vehicle according to an embodiment of the invention;
FIG. 3 is an assembly schematic diagram of a first drive motor, a first transmission assembly and a first wheel in the distributed drive system for the vehicle according to an embodiment of the invention;
FIG. 4 is an assembly schematic diagram of the second drive motor, a second transmission assembly and a second wheel in the distributed drive system for the vehicle according to an embodiment of the invention;
FIG. 5 is a schematic diagram showing a relative positional relationship among the first drive motor, a first gear and a third gear in the distributed drive system for the vehicle according to an embodiment of the invention;
FIG. 6 is a schematic diagram showing a relative positional relationship among the first drive motor, the first transmission assembly, the second wheel and the second drive motor in the distributed drive system for the vehicle according to an embodiment of the invention;
FIG. 7 is a schematic diagram showing a relative positional relationship among the second drive motor, the second transmission assembly, the first wheel and the first drive motor in the distributed drive system for the vehicle according to an embodiment of the invention;
FIG. 8 is a schematic structural diagram of another distributed drive system for a vehicle according to an embodiment of the invention; and
FIG. 9 is a schematic structural diagram of a drive assembly for a vehicle according to an embodiment of the invention.

### Description of reference numerals

1, drive assembly; 10, distributed drive system; 11, first wheel; 12, second wheel; 100, first drive system; 110, first drive motor; 111, first free end; 120, first transmission assembly; 121, first oil churning member; 122, first gear; 123, first output shaft; 124, first intermediate shaft; 125, third gear; 126, first planetary gear train; 1261, sun gear; 1262, planet gear; 1263, planet carrier; 1264, external gear ring; 127, first transmission gear train; 200, second drive system; 210, second drive motor; 211, second free end; 220, second transmission assembly; 221, second oil churning member; 222, second gear; 223, second output shaft; 224, second intermediate shaft; 225, fourth gear; 226, second planetary gear train; 227, second transmission gear train; 300, connecting shaft; 310, connection structure.

### DETAILED DESCRIPTION

To make the objectives, technical solutions and advantages of the invention clearer, the invention is described in further detail below with reference to the accompanying drawings and embodiments. It should be understood that the specific embodiments described herein are only for explaining the invention and are not intended to limit the invention.

Various specific technical features described in the specific embodiments may be combined in any suitable manner without conflict, for example, different embodiments and technical solutions may be formed by combining different specific technical features. To avoid unnecessary repetition, various possible combinations of specific technical features in the invention are not described separately.

In the following description, the terms "first/second/ ..." are only used to distinguish different objects and do not imply that the objects have the same or related relationship. It should be understood that the orientation descriptions such as "above", "below", "outer", and "inner" refer to orientations in a normal use state, and directions such as "left" and "right" refer to left and right directions shown in corresponding specific schematic diagrams, which may or may not be the left and right directions in the normal use state.

It should be noted that the terms "comprise", "include", or any other variation thereof are intended to cover a non-exclusive inclusion, such that a process, method, article, or apparatus that comprises a list of elements includes not only those elements but also other elements not expressly listed, or elements inherent to such process, method, article, or apparatus. Without further limitation, an element defined by the phrase "comprising a ..." does not preclude the presence of additional identical elements in the process, method, article, or apparatus that comprises the element. The term "connected" includes both direct connection and indirect connection unless otherwise specified.

In the following embodiments, a distributed drive system can be applied to any type of vehicle. Exemplarily, the distributed drive system can be applied to cars as well as trucks; the distributed drive system can be applied to some of drive axles of a vehicle. Exemplarily, the distributed drive system is applied to a front drive axle of a vehicle, and the distributed drive system can also be applied to a rear drive axle of a vehicle. For ease of description, a structure of the distributed drive system is exemplarily described below by taking an application of the distributed drive system to a rear drive axle of a car as an example.

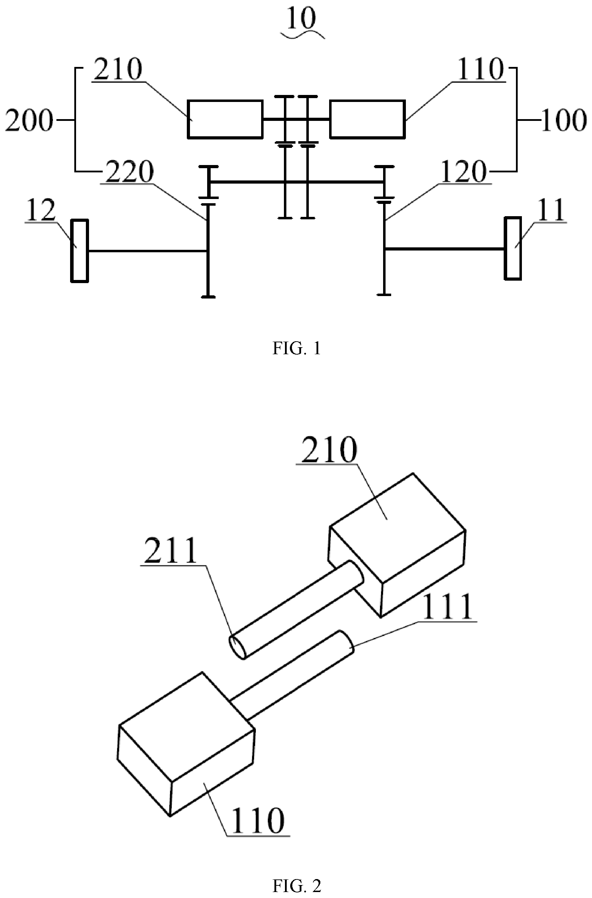

In some embodiments, as shown in FIG. 1, the distributed drive system 10 includes: a first drive system 100 and a second drive system 200. The first drive system 100 includes a first drive motor 110 and a first transmission assembly 120. The second drive system 200 includes a second drive motor 210 and a second transmission assembly 220. Optionally, the first drive motor 110 and the second drive motor 210 drive, respectively through the first transmission assembly 120 and the second transmission assembly 220, different wheels of a same drive axle. Exemplarily, the drive axle is a rear drive axle. The rear drive axle includes a first wheel 11 and a second wheel 12. The first wheel 11 is located at a left side of the rear drive axle, and the second wheel 12 is located at a right side of the rear drive axle. It can be understood that the first drive motor 110 and the second drive motor 210 independently control, respectively through the first transmission assembly 120 and the second transmission assembly 220, left and right wheels of the rear drive axle, to achieve a distributed driving of the rear drive axle.

In a plane parallel to an axial direction of an output shaft of the first drive motor 110, a projection of the output shaft of the first drive motor 110 and a projection of an output shaft of the second drive motor 210 have an overlapping portion, that is, the output shaft of the first drive motor 110 and the output shaft of the second drive motor 210 are disposed at an interval in a direction perpendicular to the axial direction of the output shaft of the first drive motor 110; and the output shaft of the first drive motor 110 and the output shaft of the second drive motor 210 are disposed in a staggered manner in the axial direction of the output shaft of the first drive motor 110. Specifically, as shown in FIG. 2, the output shaft of the first drive motor 110 is extended from an end face of a housing of the first drive motor 110 to form a first free end 111 of the output shaft of the first drive motor 110; and the output shaft of the second drive motor 210 is extended from an end face of a housing of the second drive motor 210 to form a second free end 211 of the output shaft of the second drive motor 210. In the axial direction of the output shaft of the first drive motor 110, a distance between the first free end 111 and the end face of the first drive motor 110 is smaller than a distance between the second free end 211 and the end face of the first drive motor 110. It can be understood that, by disposing the output shaft of the first drive motor 110 and the output shaft of the second drive motor 210 in an axially overlapping manner, an arrangement of the distributed drive system 10 in this axial direction is made more compact, and a dimension of the distributed drive system 10 in this axial direction is reduced.

The invention provides a distributed drive system for a vehicle. The distributed drive system includes a first drive system and a second drive system. The first drive system includes a first drive motor and a first transmission assembly. The second drive system includes a second drive motor and a second transmission assembly. The first drive motor and the second drive motor drive, respectively through the first transmission assembly and the second transmission assembly, different wheels of the same drive axle to rotate, to realize a distributed driving of the drive axle. Meanwhile, in a plane parallel to an axial direction of an output shaft of the first drive motor, a projection of the output shaft of the first drive motor and a projection of an output shaft of the second drive motor have an overlapping portion, that is, the output shaft of the first drive motor and the output shaft of the second drive motor are disposed at an interval in a direction perpendicular to the axial direction of the output shaft of the first drive motor, and the output shaft of the first drive motor and the output shaft of the second drive motor are disposed in a staggered manner in the axial direction of the output shaft of the first drive motor. By disposing the output shaft of the first drive motor and the output shaft of the second drive motor in an axially overlapping manner, an arrangement of the distributed drive system in this axial direction is made more compact, and a dimension of the distributed drive system in this axial direction is reduced.

In some embodiments, as shown in FIG. 1, the output shaft of the first drive motor 110 and the output shaft of the second drive motor 210 are disposed at an interval in a horizontal direction, and a projection of the output shaft of the first drive motor 110 and a projection of the output shaft of the second drive motor 210 in a horizontal plane have an overlapping portion. In a vertical direction, the first transmission assembly 120 and the second transmission assembly 220 are both located below the first drive motor 110 and the second drive motor 210. It can be understood that the output shaft of the first drive motor 110 and the output shaft of the second drive motor 210 are disposed at an interval in the horizontal plane and in a staggered manner in the axial direction, and the first transmission assembly 120 and the second transmission assembly 220 are both located below the horizontal plane, thereby reducing, while disposing the output shaft of the first drive motor 110 and the output shaft of the second drive motor 210 in a staggered manner, a possibility that the output shaft of the first drive motor 110 and the output shaft of the second drive motor 210 block the first transmission assembly 120 and the second transmission assembly 220.

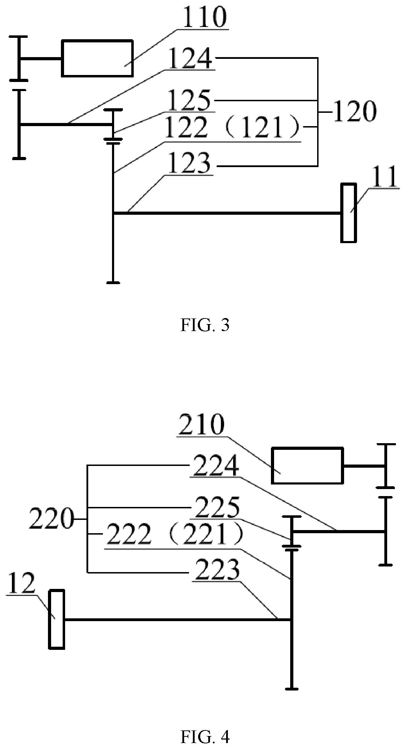

In some embodiments, with reference to FIG. 3 and FIG. 4, the first drive system 100 includes a first drive motor 110 and a first transmission assembly 120. The first drive motor 110 drives, through the first transmission assembly 120, a first wheel 11 of the vehicle to rotate. The second drive system 200 includes a second drive motor 210 and a second transmission assembly 220. The second drive motor 210 drives, through the second transmission assembly 220, a second wheel 12 of the vehicle to rotate. Optionally, in a width direction of the vehicle, the first drive motor 110 and the first wheel 11 are located at a same side, and the second drive motor 210 and the second wheel 12 are located at a same side.

Simultaneously, as shown in FIG. 3, the first transmission assembly 120 includes a first oil churning member 121, and the first oil churning member 121 is located directly below the first drive motor 110, so that the first oil churning member 121 can splash, through rotation, an engine oil onto the first drive motor 110, that is, the first transmission assembly 120 can also drive the first oil churning member 121 to rotate in a process of transmitting a torque of the first drive motor 110 to the first wheel 11. Specifically, the first transmission assembly 120 and the first drive motor 110 are accommodated in a same housing, and the first oil churning member 121 can stir the engine oil contained at a bottom of the housing through rotation to splash the engine oil, so that the engine oil can be splashed onto the first drive motor 110, and in turn the stator of the first drive motor 110 is cooled by a splashed engine oil. As shown in FIG. 4, the second transmission assembly 220 includes a second oil churning member 221, and the second oil churning member 221 is located directly below the second drive motor 210, so that the second oil churning member 221 can splash an engine oil onto the second drive motor 210 through rotation, that is, the second transmission assembly 220 can also drive the second oil churning member 221 to rotate in a process of transmitting a torque of the second drive motor 210 to the second wheel 12. Specifically, the second transmission assembly 220 and the second drive motor 210 are accommodated in the same housing, and the second oil churning member 221 can agitate the engine oil contained at the bottom of the housing through rotation to splash the engine oil, so that the engine oil can be splashed onto the second drive motor 210, and in turn a stator of the second drive motor 210 is cooled by the splashed engine oil. It can be understood that, by disposing the first drive motor 110 and the first transmission assembly 120 to be in a same cavity and share a same oil circuit, and disposing the second drive motor 210 and the second transmission assembly 220 to be in a same cavity and share a same oil circuit, an oil splashed by the first oil churning member 121 of the first transmission assembly 120 can be used to cool a stator of the first drive motor 110, and an oil splashed by the second oil churning member 221 of the second transmission assembly 220 can be used to cool a stator of the second drive motor 210. There is no need to additionally dispose a cooling system for the first drive motor 110 and the second drive motor 210, so that the structure of the distributed drive system 10 is more compact, and the occupied space of the distributed drive system 10 is reduced.

In some embodiments, as shown in FIG. 3, the first transmission assembly 120 includes a first gear 122 and a first output shaft 123. The first gear 122 is fixed on the first output shaft 123; the first output shaft 123 is connected to the first drive motor 110 through the first gear 122; and the first output shaft 123 is connected to the first wheel 11. That is, the first drive motor 110 meshes with the first gear 122 through a transmission structure to transmit a torque to the first output shaft 123, so that the first output shaft 123 can drive the first wheel 11 to rotate. Meanwhile, the first gear 122 is located directly below the first drive motor 110 to form the first oil churning member 121. It can be understood that, in the vertical direction, the first gear 122 and the first drive motor 110 are disposed at an interval, and a portion of the first gear 122 is immersed in the engine oil accommodated at a bottom of the housing, so that the first gear 122 can splash, while transmitting the torque of the first drive motor 110 to the first output shaft 123, the engine oil to the first drive motor 110. That is, the first gear 122 capable of transmitting torque is rotated to splash oil, so that the first gear 122 has both the functions of transmitting a torque and splashing an engine oil to the first drive motor 110, thereby eliminating the need for additional oil churning structures. As shown in FIG. 4, the second transmission assembly 220 includes a second gear 222 and a second output shaft 223. The second gear 222 is fixed to the second output shaft 223; the second output shaft 223 is connected to the second drive motor 210 through the second gear 222; and the second output shaft 223 is connected to the second wheel 12. That is, the second drive motor 210 meshes with the second gear 222 through a transmission structure to transmit a torque to the second output shaft 223, so that the second output shaft 223 can drive the second wheel 12 to rotate. Meanwhile, the second gear 222 is located directly below the second drive motor 210 to form the second oil churning member 221. It can be understood that, in the vertical direction, the second gear 222 and the second drive motor 210 are disposed at an interval, and a portion of the second gear 222 is immersed in the engine oil accommodated at the bottom of the housing, so that the second gear 222 can splash, while transmitting the torque of the second drive motor 210 to the second output shaft 223, the engine oil to the second drive motor 210. That is, the second gear 222 capable of transmitting torque is rotated to splash oil, so that the second gear 222 has both functions of transmitting a torque and splashing an engine oil to the second drive motor 210, thereby eliminating the need for additional oil churning structures. In summary, the first gear 122 and the second gear 222, while transmitting the torque, can also splash the engine oil to the first drive motor 110 and the second drive motor 210 through oil splashing. Therefore, no additional oil churning member is needed, and the first gear 122 and the second gear 222 serve as the first oil churning member 121 and the second oil churning member 221 respectively to realize a cooling of the first drive motor 110 and the second drive motor 210, further improving a structural compactness of the distributed drive system 10.

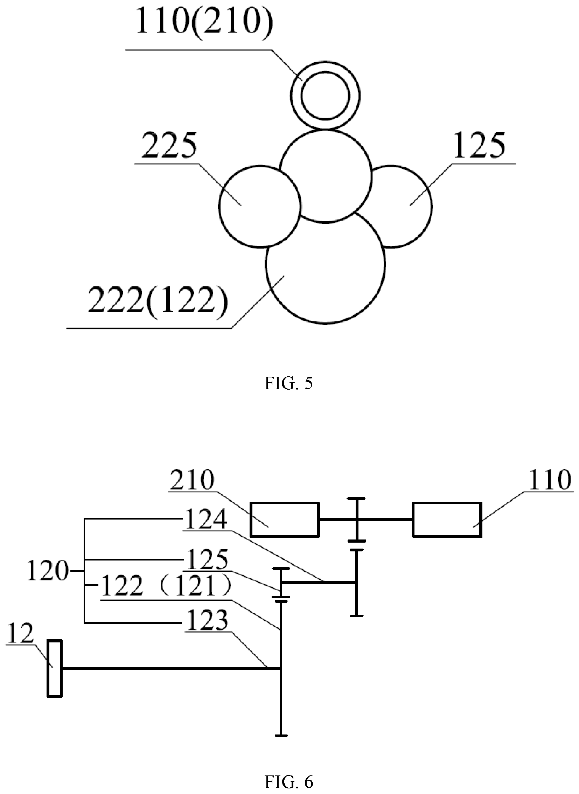

In some embodiments, as shown in FIG. 3, the first transmission assembly 120 further includes a first intermediate shaft 124 and a third gear 125. The first intermediate shaft 124 is located between the first drive motor 110 and the first output shaft 123. The first intermediate shaft 124 is connected to the first drive motor 110. The third gear 125 is fixed to the first intermediate shaft 124 and meshed with the first gear 122. That is, a power from the first drive motor 110 can be transmitted to the first intermediate shaft 124, and the first intermediate shaft 124 can transmit a power from the first intermediate shaft 124 to the first output shaft 123 through the meshing of the third gear 125 and the first gear 122. That is, the power of the first drive motor 110 is transmitted to the first output shaft 123 through the first intermediate shaft 124 disposed between the first output shaft 123 and the first drive motor 110, and the meshing between the third gear 125 and the first gear 122. Meanwhile, as shown in FIG. 5, in the horizontal direction, the third gear 125 is located at one side of the first gear 122, that is, the third gear 125 is not located directly above the first gear 122, so that the third gear 125 can not only transmit a power to the first output shaft 123, but also reduce the blocking effect of the third gear 125 on the engine oil splashed by the first gear 122, and thus the engine oil splashed by the first gear 122 can be more smoothly splashed onto the first drive motor 110.

Meanwhile, as shown in FIG. 4, the second transmission assembly 220 further includes a second intermediate shaft 224 and a fourth gear 225. The second intermediate shaft 224 is located between the second drive motor 210 and the second output shaft 223. The second intermediate shaft 224 is connected to the second drive motor 210. The fourth gear 225 is fixed to the second intermediate shaft 224 and meshed with the second gear 222. That is, a power from the second drive motor 210 can be transmitted to the second intermediate shaft 224, and the second intermediate shaft 224 can transmit the power from the second intermediate shaft 224 to the second output shaft 223 through the meshing of the fourth gear 225 and the second gear 222. That is, the power of the second drive motor 210 is transmitted to the second output shaft 223 through the second intermediate shaft 224 disposed between the second output shaft 223 and the second drive motor 210, and the meshing between the fourth gear 225 and the second gear 222. Meanwhile, as shown in FIG. 5, in the horizontal direction, the fourth gear 225 is located at one side of the second gear 222, that is, the fourth gear 225 is not located directly above the second gear 222, so that the fourth gear 225 can not only transmit power to the second output shaft 223, but also reduce the blocking effect of the fourth gear 225 on the engine oil splashed by the second gear 222, so that the engine oil splashed by the second gear 222 can be more smoothly splashed onto the second drive motor 210.

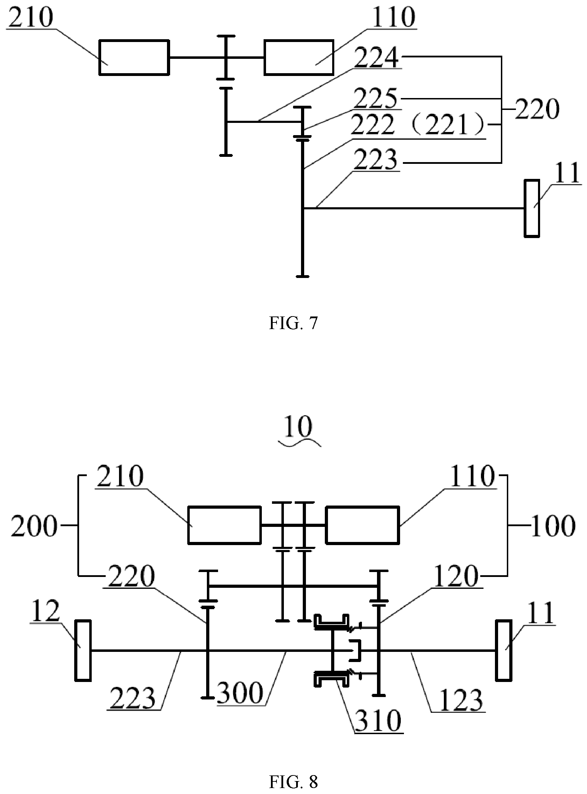

In some embodiments, with reference to FIG. 6 and FIG. 7, the first drive system 100 includes a first drive motor 110 and a first transmission assembly 120. The first drive motor 110 drives, through the first transmission assembly 120, a second wheel 12 of the vehicle to rotate. The second drive system 200 includes a second drive motor 210 and a second transmission assembly 220. The second drive motor 210 drives, through the second transmission assembly 220, a first wheel 11 of the vehicle to rotate. Optionally, in a width direction of the vehicle, the first drive motor 110 and the first wheel 11 are located at a same side, and the second drive motor 210 and the second wheel 12 are located at a same side.

As shown in FIG. 6, the first transmission assembly 120 includes a first oil churning member 121, and the first oil churning member 121 is located directly below the second drive motor 210, so that the first oil churning member 121 can splash engine oil to the second drive motor 210 through rotation. That is, the first transmission assembly 120 can also drive the first oil churning member 121 to rotate in the process of transmitting the torque of the first drive motor 110 to the second wheel 12. Specifically, the first transmission assembly 120 and the second drive motor 210 are accommodated in a same housing, and the first oil churning member 121 can stir the engine oil accommodated at the bottom of the housing through rotation to splash the engine oil, so that the engine oil can be splashed to the second drive motor 210, and in turn a stator of the second drive motor 210 is cooled by the splashed engine oil. As shown in FIG. 7, the second transmission assembly 220 includes a second oil churning member 221, and the second oil churning member 221 is located directly below the first drive motor 110, so that the second oil churning member 221 can splash engine oil to the first drive motor 110 through rotation. That is, the second transmission assembly 220 can also drive the second oil churning member 221 to rotate in the process of transmitting the torque of the second drive motor 210 to the first wheel 11. Specifically, the second transmission assembly 220 and the first drive motor 110 are accommodated in the same housing, and the second oil churning member 221 can stir the engine oil accommodated at the bottom of the housing through rotation to splash the engine oil, so that the engine oil can be splashed to the first drive motor 110, and in turn a stator of the first drive motor 110 is cooled by the splashed engine oil. It can be understood that, by disposing the first drive motor 110 and the second transmission assembly 220 to be in a common cavity and share a same engine oil, and disposing the second drive motor 210 and the first transmission assembly 120 to be in a common cavity and share a same engine oil, a stator of the second drive motor 210 can be cooled by oil splashing of the first oil churning member 121 of the first transmission assembly 120, and the stator of the first drive motor 110 can be cooled by oil splashing of the second oil churning member 221 of the second transmission assembly 220. In addition, there is no need to additionally dispose a cooling system for the first drive motor 110 and the second drive motor 210, so that a structure of the distributed drive system 10 is more compact and an occupied space of the distributed drive system 10 can be reduced.

In some embodiments, as shown in FIG. 6, the first transmission assembly 120 includes a first gear 122 and a first output shaft 123. The first gear 122 is fixed to the first output shaft 123, the first output shaft 123 is connected to the first drive motor 110 through the first gear 122, and the first output shaft 123 is connected to the second wheel 12. That is, the first drive motor 110 meshes with the first gear 122 through a transmission structure to transmit a torque to the first output shaft 123, so that the first output shaft 123 can drive the second wheel 12 to rotate. Meanwhile, the first gear 122 is located directly below the second drive motor 210 to form the first oil churning member 121. It can be understood that, in the vertical direction, the first gear 122 and the second drive motor 210 are disposed at an interval, and a portion of the first gear 122 is immersed in the engine oil accommodated at the bottom of the housing, so that the first gear 122 can splash the engine oil to the second drive motor 210 while transmitting the torque of the first drive motor 110 to the first output shaft 123. That is, the first gear 122 capable of transmitting torque rotates to splash oil, so that the first gear 122 has both the functions of transmitting torque and splashing engine oil to the second drive motor 210, thereby eliminating the need for additional oil churning structures.

As shown in FIG. 7, the second transmission assembly 220 includes a second gear 222 and a second output shaft 223. The second gear 222 is fixed to the second output shaft 223, the second output shaft 223 is connected to the second drive motor 210 through the second gear 222, and the second output shaft 223 is connected to the first wheel 11. That is, the second drive motor 210 meshes with the second gear 222 through a transmission structure to transmit a torque to the second output shaft 223, so that the second output shaft 223 can drive the first wheel 11 to rotate. Meanwhile, the second gear 222 is located directly below the first drive motor 110 to form the second oil churning member 221. It can be understood that, in the vertical direction, the second gear 222 and the first drive motor 110 are disposed at an interval, and a portion of the second gear 222 is immersed in the engine oil accommodated at the bottom of the housing, so that the second gear 222 can splash the engine oil to the first drive motor 110 while transmitting the torque of the second drive motor 210 to the second output shaft 223. That is, the second gear 222 capable of transmitting torque rotates to splash oil, so that the second gear 222 has both the functions of transmitting torque and splashing engine oil to the first drive motor 110, thereby eliminating the need for additional oil churning structures. In summary, while the first gear 122 and the second gear 222 transmit torque, the first gear 122 and the second gear 222 can also splash engine oil to the second drive motor 210 and the first drive motor 110 through oil splashing. Therefore, no additional oil churning member is needed, and the first gear 122 and the second gear 222 serve as the first oil churning member 121 and the second oil churning member 221 respectively to realize the cooling of the second drive motor 210 and the first drive motor 110, which further improves the structural compactness of the distributed drive system 10.

In some embodiments, as shown in FIG. 6, the first transmission assembly 120 further includes a first intermediate shaft 124 and a third gear 125. The first intermediate shaft 124 is located between the second drive motor 210 and the first output shaft 123, the first intermediate shaft 124 is connected to the first drive motor 110, and the third gear 125 is fixed to the first intermediate shaft 124 and meshed with the first gear 122. That is, a power of the first drive motor 110 can be transmitted to the first intermediate shaft 124, and the first intermediate shaft 124 can transmit the power from the first intermediate shaft 124 to the first output shaft 123 through a meshing of the third gear 125 and the first gear 122. That is, the power of the first drive motor 110 is transmitted to the first output shaft 123 through the first intermediate shaft 124 disposed between the first output shaft 123 and the first drive motor 110, and the meshing between the third gear 125 and the first gear 122. Meanwhile, in the horizontal direction, the first intermediate shaft 124 is located between the first output shaft 123 and the first drive motor 110, so that the third gear 125 is meshed with the first gear 122 on a side away from the second drive motor 210, and in turn the third gear 125 can not only transmit a power to the first output shaft 123, but also reduce a blocking effect of the third gear 125 on the engine oil splashed by the first gear 122, so that the engine oil splashed by the first gear 122 can be splashed to the second drive motor 210 more smoothly.

As shown in FIG. 7, the second transmission assembly 220 further includes a second intermediate shaft 224 and a fourth gear 225. The second intermediate shaft 224 is located between the first drive motor 110 and the second output shaft 223, the second intermediate shaft 224 is connected to the second drive motor 210, and the fourth gear 225 is fixed to the second intermediate shaft 224 and meshed with the second gear 222. That is, a power of the second drive motor 210 can be transmitted to the second intermediate shaft 224, and the second intermediate shaft 224 can transmit the power from the second intermediate shaft 224 to the second output shaft 223 through the meshing of the fourth gear 225 and the second gear 222. That is, the power of the second drive motor 210 is transmitted to the second output shaft 223 through the second intermediate shaft 224 disposed between the second output shaft 223 and the second drive motor 210 and the meshing between the fourth gear 225 and the second gear 222. Meanwhile, in the horizontal direction, the second intermediate shaft 224 is located between the second output shaft 223 and the second drive motor 210, so that the fourth gear 225 is meshed with the second gear 222 on a side away from the first drive motor 110, and in turn, the fourth gear 225 can not only transmit power to the second output shaft 223, but also reduce a blocking effect of the fourth gear 225 on the engine oil splashed by the second gear 222, so that the engine oil splashed by the second gear 222 can be splashed to the first drive motor 110 more smoothly.

In some embodiments, as shown in FIG. 8, the first output shaft 123 and the second output shaft 223 are collinear. The distributed drive system 10 further includes a connecting shaft 300, the connecting shaft 300 connects the first output shaft 123 and the second output shaft 223, and the connecting shaft 300 is provided with a connection structure 310 capable of switching between a first state and a second state. When the connection structure is in the first state, a torque cannot be transmitted between the first drive system 100 and the second drive system 200 through the connecting shaft 300. When the connection structure 310 is in the second state, torque can be transmitted between the first drive system 100 and the second drive system 200 through the connecting shaft 300. It can be understood that, by connecting the first drive system 100 and the second drive system 200 through the connecting shaft 300, during a normal driving of the vehicle, the connection structure 310 is in the first state, and torque cannot be transmitted between the first drive system 100 and the second drive system 200 through the connecting shaft 300, that is, the torques of the first drive system 100 and the second drive system 200 are in a decoupled state, thereby achieving distributed driving of the vehicle. When one of the first wheel and the second wheel of the vehicle is in a slipping state, causing the vehicle to be unable to drive, a state of the connection structure 310 is switched to the second state. At this time, torque can be transmitted between the first drive system 100 and the second drive system 200 through the connecting shaft 300, that is, the torques of the first drive system 100 and the second drive system 200 are coupled, so that the torques output by the first drive motor 110 and the second drive motor 210 can be coupled and in turn transmitted to the first wheel 11 and the second wheel 12, thereby improving an obstacle crossing ability of the vehicle. In a condition that one of the first drive motor 110 and the second drive motor 210 of the vehicle fails and cannot operate, the state of the connection structure 310 is switched to the second state. At this time, the normally operating drive motor can transmit torque to the failed drive system through the connecting shaft 300, to drive the first wheel 11 and the second wheel 12 to rotate at the same time. Meanwhile, the vehicle alarms to notify the driver of the drive motor failure and the speed of the vehicle can be limited, that is, the limp-home function of the vehicle can be realized. Optionally, the connecting shaft 300 may be connected to different portions of the first drive system 100 and the second drive system 200, so that a torque can be transmitted between the first drive system 100 and the second drive system 200.

It should be noted that the connection structure 310 can be any structure capable of realizing and interrupting the power transmission between the first drive system 100 and the second drive system 200. Exemplarily, the connection structure 310 is a clutch. In a condition that the clutch is disengaged, the connection structure 310 is in the first state, and the torque cannot be transmitted between the first drive system 100 and the second drive system 200 through the connecting shaft 300. When the clutch is in an engaged state, the connection structure 310 is in the second state, and torque can be transmitted between the first drive system 100 and the second drive system 200 through the connecting shaft 300. Exemplarily, the connection structure 310 is a coupling sleeve. In a condition that the coupling sleeve is disengaged, the coupling sleeve idles, and thus the connection structure 310 is in the first state, and a torque cannot be transmitted between the first drive system 100 and the second drive system 200 through the connecting shaft 300. In a condition that the coupling sleeve is engaged, the coupling sleeve can drive the connecting shaft 300 to rotate, and thus the connection structure 310 is in the second state, and torque can be transmitted between the first drive system 100 and the second drive system 200 through the connecting shaft 300.

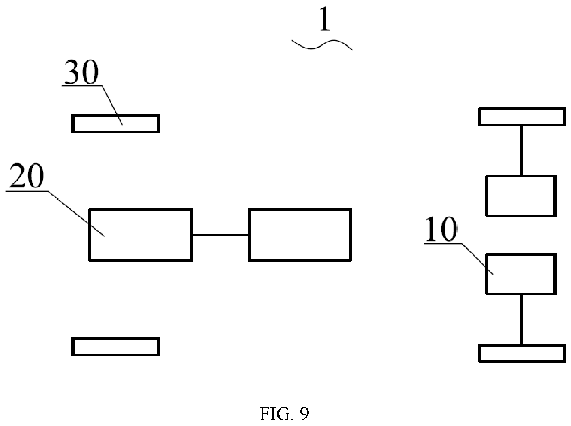

In some embodiments, as shown in FIG. 9, the drive assembly 1 includes: a range extender assembly 20, an in-wheel motor 21, and the distributed drive system 10. The range extender assembly 20 is an assembly capable of driving a generator to generate electricity through the operation of an engine, and is configured to charge a power battery of the vehicle. The in-wheel motor 21 is configured to obtain electric energy from the power battery and drive wheels of a front drive axle of the vehicle. The distributed drive system 10 has a structure as shown in any one of FIG. 1 to FIG. 8, and is configured to drive wheels of a rear drive axle of the vehicle. It can be understood that the front drive axle of the vehicle is driven by the in-wheel motor 21, which provides an installation space for the range extender assembly 20 disposed in a front cabin of the vehicle. Meanwhile, the arrangement of the range extender assembly 20 can also provide electric energy for the vehicle and extend a driving range of the vehicle.

The above are only preferred embodiments of the invention, and are not intended to limit the protection scope of the invention.

## Claims

1. A distributed drive system for a vehicle, **characterized by** comprising:
a first drive system comprising a first drive motor and a first transmission assembly; and
a second drive system comprising a second drive motor and a second transmission assembly;
wherein the first drive motor and the second drive motor drive, respectively through the first transmission assembly and the second transmission assembly, different wheels of a same drive axle to rotate;
in a plane parallel to an axial direction of an output shaft of the first drive motor, a projection of the output shaft of the first drive motor and a projection of an output shaft of the second drive motor have an overlapping portion.

2. The distributed drive system according to claim 1, wherein the output shaft of the first drive motor and the output shaft of the second drive motor are disposed at an interval in a horizontal direction, a projection of the output shaft of the first drive motor and a projection of the output shaft of the second drive motor in a horizontal plane having an overlapping portion; and wherein in a vertical direction, the first transmission assembly and the second transmission assembly are both located below the first drive motor and the second drive motor; wherein the horizontal plane is a plane with the vertical direction as a normal line.

3. The distributed drive system according to claim 2, wherein the first drive motor drives a first wheel of the drive axle to rotate through the first transmission assembly, the first transmission assembly comprising a first oil churning member which is located directly below the first drive motor;
the second drive motor drives a second wheel of the drive axle to rotate through the second transmission assembly, the second transmission assembly comprising a second oil churning member which is located directly below the second drive motor;
wherein in a width direction of the vehicle, the first drive motor and the first wheel are located at a same side, and the second drive motor and the second wheel are located at a same side.

4. The distributed drive system according to claim 3, wherein the first transmission assembly comprises a first gear and a first output shaft, the first gear being fixed to the first output shaft, the first output shaft being connected to the first drive motor through the first gear, the first output shaft being connected to the first wheel, the first gear being located below the first drive motor to form the first oil churning member;
the second transmission assembly comprises a second gear and a second output shaft, the second gear being fixed to the second output shaft, the second output shaft being connected to the second drive motor through the second gear, the second output shaft being connected to the second wheel, the second gear being located below the second drive motor to form the second oil churning member.

5. The distributed drive system according to claim 4, wherein the first transmission assembly further comprises a first intermediate shaft and a third gear, the first intermediate shaft being located between the first drive motor and the first output shaft in the vertical direction, the first intermediate shaft being connected to the first drive motor, the third gear being fixed to the first intermediate shaft and meshed with the first gear;
the second transmission assembly further comprises a second intermediate shaft and a fourth gear, the second intermediate shaft being located between the second drive motor and the second output shaft in the vertical direction, the second intermediate shaft being connected to the second drive motor, the fourth gear being fixed to the second intermediate shaft and meshed with the second gear;
wherein, in the horizontal direction, the third gear is located at one side of the first gear, the fourth gear being located at one side of the second gear, the horizontal direction being perpendicular to the vertical direction.

6. The distributed drive system according to claim 2, wherein the first drive motor drives a second wheel of the drive axle to rotate through the first transmission assembly, the first transmission assembly comprising a first oil churning member which is located directly below the second drive motor;
the second drive motor drives a first wheel of the drive axle to rotate through the second transmission assembly, the second transmission assembly comprising a second oil churning member which is located directly below the first drive motor;
wherein, in a width direction of the vehicle, the first drive motor and the first wheel are located at a same side, and the second drive motor and the second wheel are located at a same side.

7. The distributed drive system according to claim 6, wherein the first transmission assembly comprises a first gear and a first output shaft, the first gear being fixed to the first output shaft, the first output shaft being connected to the first drive motor through the first gear, the first output shaft being connected to the second wheel, the first gear being located below the second drive motor to form the first oil churning member;
the second transmission assembly comprises a second gear and a second output shaft, the second gear being fixed to the second output shaft, the second output shaft being connected to the second drive motor through the second gear, the second output shaft being connected to the first wheel, the second gear being located below the first drive motor to form the second oil churning member.

8. The distributed drive system according to claim 7, wherein the first transmission assembly further comprises a first intermediate shaft and a third gear, the first intermediate shaft being located between the second drive motor and the first output shaft in the vertical direction, the first intermediate shaft being connected to the first drive motor, the third gear being fixed to the first intermediate shaft and meshed with the first gear;
the second transmission assembly further comprises a second intermediate shaft and a fourth gear, the second intermediate shaft being located between the first drive motor and the second output shaft in the vertical direction, the second intermediate shaft being connected to the second drive motor, the fourth gear being fixed to the second intermediate shaft and meshed with the second gear;
wherein, in the horizontal direction, the third gear is located at one side of the first gear, the fourth gear being located at one side of the second gear, the horizontal direction being perpendicular to the vertical direction.

9. The distributed drive system according to claim 4 or 7, wherein the first output shaft and the second output shaft are collinear;
the distributed drive system further comprises a connecting shaft, the connecting shaft connecting the first output shaft and the second output shaft, the connecting shaft being provided with a connection structure capable of switching between a first state and a second state, and wherein when the connection structure is in the first state, a torque is not able to be transmitted between the first drive system and the second drive system through the connecting shaft, and when the connection structure is in the second state, the torque is able to be transmitted between the first drive system and the second drive system through the connecting shaft.

10. A drive assembly for a vehicle, **characterized by** comprising:
a range extender assembly configured to charge a power battery of the vehicle;
an in-wheel motor configured to drive wheels of a front drive axle of the vehicle;
the distributed drive system according to any one of claims 1 to 9, configured to drive wheels of a rear drive axle of the vehicle.
